Europäisches Patentamt

European Patent Office

Office européen des brevets

(19)

(11) Numéro de publication : **0 035 446**
**B1**

(12) **FASCICULE DE BREVET EUROPÉEN**

(45) Date de publication du fascicule du brevet :
13.07.83

(51) Int. Cl.³ : **F 16 D 66/02**

(21) Numéro de dépôt : **81400297.8**

(22) Date de dépôt : **26.02.81**

(54) **Perfectionnements apportés aux éléments de friction, notamment aux plaquettes de freins, et à leur procédé de fabrication.**

(30) Priorité : **03.03.80 FR 8004733**

(43) Date de publication de la demande :
**09.09.81 Bulletin 81/36**

(45) Mention de la délivrance du brevet :
**13.07.83 Bulletin 83/28**

(84) Etats contractants désignés :
**DE GB IT**

(56) Documents cités :
**FR A 1 471 036**
**FR A 2 260 724**

(73) Titulaire : **SOCIETE ANONYME AUTOMOBILES CITROEN**
**117 à 167, Quai André Citroen**
**F-75747 Paris Cedex 15 (FR)**

**AUTOMOBILES PEUGEOT**
**75, avenue de la Grande ·Armée**
**F-75116 Paris (FR)**

(72) Inventeur : **Papagni, Robert**
**17, rue de Versailles**
**F-78470 Saint-Remy-Les-Chevreuse (FR)**

(74) Mandataire·: **Michardière, Bernard et al**
**Cabinet Plasseraud 84, rue d'Amsterdam**
**F-75009 Paris (FR)**

EP 0 035 446 B1

Perfectionnements apportés aux éléments de friction, notamment aux plaquettes de freins, et à leur procédé de fabrication

L'invention est relative à des perfectionnements apportés aux éléments de friction, notamment pour freins de véhicules automobiles, du genre de ceux qui comprennent un support, une garniture de friction fixée sur le support et un détecteur d'usure de garniture formé par un fil conducteur logé, en partie, dans un évidement prévu dans la face du support sur laquelle est fixée la garniture, ces éléments de friction étant destinés à être soumis à l'action d'un organe de poussée, en appui contre la face du support opposée à la garniture, de telle sorte que cette garniture soit appliquée contre une partie à freiner.

L'invention concerne plus particulièrement le cas où l'élément de friction est constitué par une plaquette de frein pour frein à disque.

L'invention a pour but, surtout, de rendre les éléments de friction tels qu'ils répondent mieux que jusqu'à présent aux diverses exigences de la pratique et notamment tels qu'ils soient d'une réalisation plus simple et d'un prix de revient plus réduit tout en assurant de bonnes conditions de fonctionnement de l'ensemble dans lequel ils sont incorporés.

Selon l'invention, un élément de friction, notamment une plaquette de frein, du genre défini précédemment, est caractérisé par le fait que la face du support opposée à la garniture de friction présente une saillie formée en correspondance avec une empreinte constituant l'évidement, cette saillie étant propre à coopérer avec l'organe de poussée pour assurer un arrêt en rotation de cet organe de poussée par rapport à l'élément de friction.

De préférence, la saillie et l'empreinte correspondante sont situées au milieu de l'élément de friction, suivant la direction de la grande dimension du support.

Avantageusement, la saillie et l'empreinte correspondante sont obtenues par emboutissage du support.

Pour assurer un meilleur arrêt en rotation de l'organe de poussée, on peut prévoir sur la face du support opposée à la garniture une seconde saillie située dans le prolongement de la première ; une seconde empreinte correspond à cette saillie dans la face du support sur laquelle est fixée la garniture ; cette seconde saillie et cette seconde empreinte, tout en étant alignées avec la première saillie et la première empreinte, sont séparées d'elles par une zone du support.

Les deux saillies et empreintes peuvent être réalisées par une seule opération d'emboutissage.

Dans le cas où l'élément de friction est constitué par une plaquette de frein, pour frein à disque, la saillie et l'empreinte correspondante sont avantageusement orientées suivant une direction correspondant à une direction radiale du disque.

Généralement, le fil conducteur logé en partie dans l'empreinte, est incorporé partiellement dans la garniture de friction.

Dans le cas d'une plaquette de frein à disque, la disposition de la saillie et de l'empreinte correspondante au milieu de la plaquette suivant la direction de la grande dimension du support, c'est-à-dire au milieu de cette plaquette suivant le sens périphérique du disque, avec orientation radiale de la saillie et de l'empreinte, est particulièrement avantageuse pour un frein à disque agencé de telle sorte que les points d'application des organes de poussée, situés de part et d'autre du disque, soient décalés suivant le sens périphérique, par rapport à la ligne médiane ; une telle plaquette peut convenir, en effet, aussi bien pour le côté droit que pour le côté gauche du disque.

L'invention est également relative à un procédé de fabrication d'un élément de friction du genre défini précédemment, procédé selon lequel on réalise par emboutissage, dans le support, au moins une saillie sur la face du support opposée à la garniture, une empreinte correspondant à la saillie étant réalisée sur la face de ce support contre laquelle est fixée la garniture, puis on dispose dans l'empreinte un fil conducteur isolé, la fixation de la garniture de friction étant ensuite réalisée sur la face du support comportant l'empreinte.

L'invention consiste, mises à part les dispositions exposées ci-dessus, en certaines autres dispositions dont il sera plus explicitement question ci-après à propos d'un mode de réalisation particulier décrit avec référence au dessin ci-annexé, mais qui n'est nullement limitatif.

La figure 1, de ce dessin, est une coupe partielle suivant I-I, fig. 2, avec parties en extérieur d'une plaquette de frein selon l'invention.

La figure 2 est une vue en élévation de la plaquette de frein.

La figure 3, enfin, est une coupe suivant III-III figure 2.

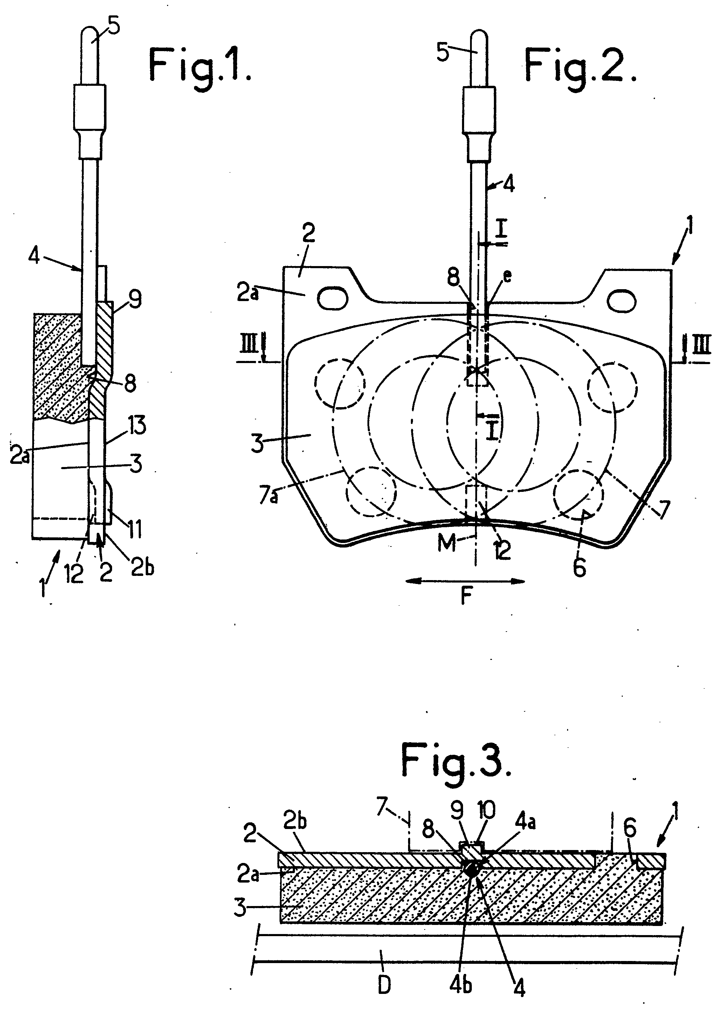

En se reportant au dessin, on peut voir un élément de friction constitué par une plaquette 1 de frein, pour frein à disque. Cette plaquette comprend un support 2 formé par une plaque métallique, et une garniture de friction 3 fixée sur le support 2. Lorsque la plaquette 1 est montée dans le frein à disque, le support 2 et la garniture 3 sont parallèles au plan du disque D (fig. 3).

La plaquette 1 comporte, en outre, un détecteur d'usure de garniture formé par un fil conducteur isolé 4 logé, en partie, dans un évidement e prévu dans la face 2a du support sur laquelle est fixée la garniture 3. Le fil conducteur 4 comprend une gaine isolante extérieure 4a (fig. 3) et une âme conductrice 4b, notamment formée par un fil de cuivre. D'une manière connue, l'âme 4b est reliée électriquement à une fiche 5 propre à être branchée dans un circuit électrique de détection. L'âme 4a comporte une partie en saillie par rapport à la face 2a ; lorsque la garniture 3 est suffisamment usée pour que cette âme 4a vienne en contact avec le disque du frein, le circuit de détection d'usure se ferme et un signal, notamment lumineux, est émis.

Avantageusement, comme visible sur la figure 3, la partie du fil conducteur isolé 4 en saillie par rapport à la face 2a, est incorporée dans la garniture 3. La fixation de cette garniture sur le support 2 est assurée par collage, ou par surmoulage ; des ouvertures, notamment circulaires, telles que 6, peuvent être prévues pour permettre l'ancrage de la garniture sur le support 2.

La plaquette 1 est destinée à être appliquée, par sa garniture 3, contre le disque D (fig. 3) par un organe de poussée 7 (fig. 3) en appui contre la face 2b du support opposée à la garniture 3. L'organe de poussée 7 peut être constitué par un piston ou par une branche d'étrier.

La face 2b présente une saillie 9 (fig. 1 et 3) formée en correspondance avec une empreinte 8, constituant l'évidement e ; cette saillie 9 est propre à coopérer avec l'organe de poussée 7 pour assurer un arrêt en rotation de cet organe 7 par rapport à la plaquette 1. Généralement, l'organe de poussée 7 comporte une rainure 10 (fig. 3) pour recevoir la saillie ou nervure 9.

La saillie 9 et l'empreinte 8 sont avantageusement obtenues par emboutissage du support 2.

La saillie 9 et l'empreinte correspondante 8 sont, de préférence, situées au milieu de la plaquette de friction, suivant la direction F (représentée par une double flèche) de la grande dimension du support 2, comme visible sur la figure 2. La direction F correspond sensiblement à la direction périphérique du disque D.

La saillie 9 et l'empreinte 8 sont avantageusement orientées suivant une direction correspondant à une direction radiale du disque D. Comme visible sur le dessin, notamment sur la figure 1, le fil conducteur isolé 4 sort dans la tranche (ou dans le chant) de la garniture 3, dans un plan parallèle à celui du disque.

Pour assurer un meilleur arrêt en rotation de l'organe de poussée 7 par rapport à la plaquette 1, on peut prévoir, sur la face 2b une seconde saillie 11 (fig. 1) située dans le prolongement de la première saillie 9 ; une seconde empreinte 12 correspond à cette seconde saillie. Cette seconde saillie 11 et cette seconde empreinte 12 tout en étant alignées avec la première saillie 9 et la première empreinte 8, sont séparées d'elles par une zone 13 du support. Cette seconde saillie 11 coopère avec une rainure prévue dans l'organe de poussée.

Les deux saillies 9 et 11 et les deux empreintes 8 et 12 sont réalisées par une seule opération d'emboutissage et débouchent, comme visible sur les figures 1 et 2, sur les deux bords longitudinaux opposés du support 2.

Le cas échéant, la saillie 9 pourrait s'étendre d'un bord à l'autre de la face 2b sur toute la largeur de cette face.

La disposition de la saillie 9 et de l'empreinte correspondante 8 au milieu de la plaquette suivant le sens de la grande dimension du support, avec l'orientation radiale de la saillie, est particulièrement avantageuse pour un frein à disque agencé de telle sorte que les points d'application des organes de poussée situés de part et d'autre du disque soient décalés dans le sens périphérique par rapport à la ligne médiane M.

Sur la figure 2 on a représenté en trait mixte le contour d'un organe de poussée 7 situé d'un côté du disque et le contour de l'autre organe de poussée 7a situé de l'autre côté du disque D. On voit qu'il y a un décalage suivant la direction F des deux organes de poussée, symétriquement de part et d'autre de la ligne M. Un tel décalage, d'une manière connue, permet de supprimer ou de réduire l'usure en biais des garnitures de friction, les vibrations et le bruit.

Avec la disposition médiane de la saillie 9 et de l'empreinte 8, la plaquette 1 peut convenir pour chaque côté du disque puisque dans les deux cas la saillie 9 aura sa ligne moyenne orientée suivant la ligne M.

De préférence, pour fabriquer une plaquette selon l'invention, on réalise dans le support 2, par emboutissage, les saillies 9 et 11 et les empreintes 8 et 12 correspondantes. On introduit, ensuite, le fil conducteur isolé 4, par sa zone d'extrémité, dans l'empreinte 8 et on fixe la garniture 3 sur le support 2, notamment par surmoulage. La fixation du fil 4 est assurée lors de cette opération.

Il apparaît que l'invention permet de réaliser de manière simple un élément de friction comportant un détecteur d'usure et des moyens pour arrêter en rotation, par rapport à l'élément de friction, un organe de poussée.

L'arrêt en rotation de l'organe de poussée par rapport à l'élément de friction facilite, notamment, les opérations de réglage.

La disposition de la saillie 9 en correspondance avec, (c'est-à-dire au même niveau que) l'empreinte 8, suivant la direction F évite une diminution sensible de l'épaisseur du support au niveau de l'empreinte 8. Il est possible par une simple opération d'emboutissage de réaliser le moyen d'arrêt en rotation de l'organe de poussée et l'évidement pour loger le détecteur d'usure.

**Revendications**

1. Elément de friction, notamment pour frein de véhicule automobile, comprenant un support (2), une garniture de friction (3), fixée sur le support et un détecteur d'usure de garniture formé par un fil conducteur (4) logé, en partie, dans un évidement (e) prévu dans la face (2a) du support sur laquelle est fixée la garniture, cet élément de friction étant destiné à être soumis à l'action d'un organe de poussée (7) en appui contre la face (2b) du support opposée à la garniture, de telle sorte que cette garniture soit appliquée contre une partie à freiner, caractérisé par le fait que la face (2b) du support opposée à la garniture de friction (3) présente une saillie (9) formée en correspondance avec l'évidement (e), cette saillie étant propre à coopérer avec l'organe de poussée (7) pour assurer un arrêt en rotation de cet organe de poussée par rapport à l'élément de friction (1).

2. Elément de friction selon la revendication 1, caractérisé par le fait que la saillie (9) et l'empreinte (8) correspondante sont situées au milieu de l'élément de friction (1) suivant la direction (F) de la grande dimension du support (2).

3. Elément de friction selon la revendication 1 ou 2, caractérisé par le fait que la saillie (9) et l'empreinte correspondante (8) sont obtenues par emboutissage du support (2).

4. Elément de friction selon l'une quelconque des revendications précédentes, caractérisé par le fait qu'une seconde saillie (11), située dans le prolongement de la première (9) est prévue sur la face (2b) du support opposée à la garniture (3).

5. Elément de friction selon la revendication 4, caractérisé par le fait qu'une seconde empreinte (12) correspond à la saillie (11) dans la face (2a) du support sur laquelle est fixée la garniture (3), une zone (13) du support séparant la première saillie (9) de la seconde saillie (11), les deux saillies et empreintes étant notamment réalisées par une seule opération d'emboutissage.

6. Elément de friction selon l'une quelconque des revendications précédentes, constitué par une plaquette de frein pour frein à disque.

7. Plaquette de frein selon la revendication 6, caractérisée par le fait que la saillie (9) et l'empreinte (8) correspondante sont orientées suivant une direction correspondant à une direction radiale du disque (D).

8. Plaquette de frein selon l'ensemble de la revendication 2 et de la revendication 6 ou 7, destinée à un frein à disque agencé de telle sorte que les points d'application des organes de poussée, situés de part et d'autre du disque, soient décalés suivant le sens périphérique, par rapport à la ligne médiane (M).

9. Procédé de fabrication d'un élément de friction selon l'une quelconque des revendications précédentes, caractérisé par le fait qu'on réalise par emboutissage, au moins une saillie (9) sur la face (2b) du support opposée à la garniture, une empreinte (8) correspondante étant réalisée sur la face (2a) de ce support contre laquelle est fixée la garniture (3), et que l'on dispose, ensuite, dans l'empreinte (8) un fil conducteur isolé (4), la fixation de la garniture de friction étant ensuite réalisée sur la face du support comportant l'empreinte.

**Claims**

1. A friction element, more particularly for a motor vehicle brake, comprising a support (2), a friction lining (3) secured to the support, and a lining wear detector in the form of a conductive wire (4) partly housed in a recess (e) formed in the surface (2a) of the support to which the lining is secured, said friction element being adapted to be subjected to the action of a member (7) to thrust it into contact with the surface (2b) of the support remote from the lining so that said lining is applied to a part to be braked, characterised in that the surface (2b) of the support remote from the friction lining (3) has a projection (9) registering with the recess (e), said projection being adapted to cooperate with the thrust means (7) to stop the rotation of said thrust means in relation to the friction element (1).

2. A friction element according to claim 1, characterised in that the projection (9) and the corresponding impression (8) are situated at the centre of the friction element (1) in the direction (F) of the major dimension of the support (2).

3. A friction element according to claim 1 or 2, characterised in that the projection (9) and the corresponding impression (8) are produced by pressing of the support (2).

4. A friction element according to any one of the preceding claims, characterised in that a second projection (11) disposed in extension of the first projection (9) is provided on the support surface (2b) remote from the lining (3).

5. A friction element according to claim 4, characterised in that a second impression (12) registers with the projection (11) in the support surface (2a) on which the lining (3) is secured, a zone (13) of the support separating the first projection (9) from the second projection (11), the two projections and impressions being made more particularly by a single pressing operation.

6. A friction element according to any one of the preceding claims, in the form of a brake pad for a disc brake.

7. A brake pad according to claim 6, characterised in that the projection (9) and the corresponding impression (8) extend in a direction corresponding to a radial direction of the disc (D).

8. A brake pad according to claim 2 together with claim 6 or 7, intended for a disc brake so arranged that the points of application of the thrust means disposed on either side of the disc are offset peripherally in relation to the centreline (M).

9. A method of producing a friction element according to any one of the preceding claims, characterised in that a pressing operation is carried out to produce at least one projection (9) on the surface (2b) of the support remote from the lining, a corresponding impression (8) being formed on the support surface (2a) against which the lining (3) is secured, and an insulated conductive wire (4) is then disposed in the impression (8), the friction lining then being secured to the support surface having the impression.

**Ansprüche**

1. Reibelement, insbesondere für Kraftfahrzeugbremsen, umfassend einen Träger (2), einen an dem Träger befestigten Reibbelag (3) und einen Detektor zur Ermittlung des Verschleißes des Reibbelages, wobei der Detektor von einem leitfähigen Draht (4) gebildet ist, der teilweise in einer Aussparung (e) angeordnet ist, die in der den Reibbelage tragenden Oberfläche (2a) des Trägers vorgesehen ist, und wobei das Reibelement zur Betätigung durch ein Druckorgan (7) bestimmt ist, das an der dem Reibbelag abgewandten Oberfläche (2b) des Trägers angreift, so daß dieser Reibbelag an ein abzubremsendes Teil angedrückt wird, dadurch gekennzeichnet, daß die dem Reibbelag (3) abgewandte Oberfläche (2b) des Trägers einen Vorsprung (9) aufweist, der in Entsprechung zu der Aussparung (e) ausgebildet ist, wobei dieser Vorsprung zum Zusammenwirken mit dem Druckorgan (7) bestimmt ist, um eine Drehung dieses Druckorganes relativ zum Reibelement (1) zu verhindern.

2. Reibelement nach Anspruch 1, dadurch gekennzeichnet, daß der Vorsprung (9) und die entsprechende Vertiefung (8) bezüglich der Richtung (F) der großen Abmessung des Trägers (2) in der Mitte des Reibelementes (1) angeordnet sind.

3. Reibelement nach Anspruch 1 oder 2, dadurch gekennzeichnet, daß der Vorsprung (9) und die entsprechende Vertiefung (8) durch Prägen des Trägers (2) hergestellt sind.

4. Reibelement nach einem der vorhergehenden Ansprüche, dadurch gekennzeichnet, daß ein in der Verlängerung des ersten Vorsprunges (9) gelegener zweiter Vorsprung (11) an der dem Reibbelag (3) abgewandten Oberfläche (2b) des Trägers vorgesehen ist.

5. Reibelement nach Anspruch 4, dadurch gekennzeichnet, daß dem Vorsprung (11) eine zweite Vertiefung (12) in der Oberfläche (2a) des Trägers entspricht, an der der Reibbelag (3) befestigt ist, wobei eine Zone (13) des Trägers den ersten Vorsprung (9) vom zweiten Vorsprung (11) trennt und wobei die beiden Vorsprünge und die beiden Vertiefungen insbesondere durch einen einzigen Prägevorgang hergestellt sind.

6. Reibelement nach einem der vorhergehenden Ansprüche, bestehend aus einem Bremsklotz für Scheibenbremsen.

7. Bremsklotz nach Anspruch 6, dadurch gekennzeichnet, daß der Vorsprung (9) und die entsprechende Vertiefung (8) in einer Richtung ausgerichtet sind, die bezüglich der Scheibe (D) radial verläuft.

8. Bremsklotz nach Anspruch (2) und Anspruch 6 oder 7 und bestimmt für eine Scheibenbremse, die so ausgebildet ist, daß die Angriffspunkte der beiderseits der Scheibe angeordneten Druckorgane bezüglich der Mittellinie (M) in Umfangsrichtung versetzt sind.

9. Verfahren zur Herstellung eines Reibelementes nach einem der vorhergehenden Ansprüche, dadurch gekennzeichnet, daß man in der dem Reibbelag abgewandten Oberfläche (2b) des Trägers mindestens einen Vorsprung (9) durch Prägen herstellt, wobei eine entsprechende Vertiefung (8) in der Fläche (2a) des Trägers erzeugt wird, an der der Reibbelag (3) befestigt ist, und daß man anschließend in der Vertiefung (8) einen isolierten leitfähigen Draht (4) anordnet, worauf die Befestigung des Reibbelages an der die Vertiefung aufweisenden Oberfläche des Trägers erfolgt.

Fig.1.

Fig.2.

Fig.3.